# EUROPEAN PATENT APPLICATION

(11) **EP 3 095 587 A1**
(43) Date of publication of application: **23.11.2016**
(21) Application number: 15168897.5
(22) Date of filing: 22.05.2015
(51) Int. Cl.: B29C 55/28, B32B 15/08, B32B 37/15, B32B 39/00

(54) **FILM LAMINATING METHOD AND DEVICE**

(71) Applicant: DingZing Chemical Corporation, Taiwan (TW)
(72) Inventor: LIN, Keng-Hsien, 812 Kaohsiung (TW)
(74) Representative: Viering, Jentschura & Partner mbB Patent- und Rechtsanwälte

(57) **Abstract**

A method of film laminating begins with a drying step (51) for drying a plastic composition. A heating step (52) melts the plastic composition to form a gelatinized combination. An extruding step (53) extrudes the gelatinized combination, and in a blow molding step (54) air is blown into the gelatinized combination to provide a film composition. In a flattening step (55), the film composition is flattened to form a film, and then in a first laminating step (56), a heterogeneous material (31) is laminated onto a surface of the film (24) using an adhesive (24) to form a composite (25). Finally, in a cutting step (58), the composite (25) is cut into suitable lengths.

## Description

### BACKGROUND OF THE INVENTION

### 1. Field of the Invention

The present invention relates to a method for producing films, and more particularly to a method and device for producing laminated films.

### 2. Description of the Related Art

Because of rapid technological developments, plastic has become a widely used material in life, and its applications range from sporting goods, clothing, electronic goods, and diverse packaging and containers, and as such is important to people.

Regarding the production processes for plastic products, plastic is first melted and extruded by rollers, and then a die head of a blow molding machine is used to form a plastic film balloon which is processed based upon different requirements.

Please refer to FIG. 1, which concerns Taiwan Utility Patent No. M388411, entitled "Blow molding mechanism of plastic blow molding machine", included herein by reference, which discloses a blow molding mechanism 11, an ejector unit 12, a rotating unit 13, a detecting unit 14, and a controlling unit 15. On a top of the blow molding mechanism 11, there is a cylindrical space (not depicted in the figures) by which the plastic material can be extruded, and by way of the blow molding mechanism 11, the plastic material is blown into a plastic film 111. The ejector unit 12 includes an ejector pin 121 which pushes on the outside of the upper part of the blow molding mechanism 11. The rotating unit 13 is disposed on the outside of the blow molding mechanism 11 and is connected to the ejector unit 12 for circling the blow molding mechanism 11. The detecting unit 14 detects the thickness of the plastic film 111 blown from the blow molding mechanism 11, while the controlling unit 15 is connected to the detecting unit 14, the rotating unit 13 and the ejector unit 12 via signaling connections.

The ejector pin 121 of the ejector unit 12 props up the outside of the upper part of the blow molding mechanism 11, so that the spacing width is not easily changed by the extrusion of the plastic material, and the detecting unit 14 detects the thickness of the plastic film 111 blown from the blow molding mechanism 11, sending the results to the controlling unit 15 which analyzes locations of deviations to improve the quality of the plastic film 111.

Certain problems exist in the above blow molding mechanism of the plastic blow molding machine:

### 1. Low efficiency

The prior art utilizes the ejector pin 121 of the ejector unit 12 to prop up the outside of the upper part of the blow molding mechanism 11, and so the spacing width is not changed easily by the extrusion of the plastic material. This solves the problem of unequal thickness of the plastic film 111. However, there is no predetermined drawing on the plastic film 111, and so it may not meet the user's appearance requirements. In addition, it takes time to print on the plastic film in a printing factory, which increases delivery costs and prolongs the overall process, decreasing production efficiencies.

### 2. Inconvenience of operation

When in the process of printing or extrusion, the plastic film 111 should be disposed on the axle of the related device, and the position of the plastic film 111 must be carefully adjusted to avoid inaccuracies. Moreover, the plastic film 111 must be pulled out carefully to prevent it from breaking under excessive force. Therefore, it is much more difficult and inconvenient for operations.

### 3. Incompatible processes

Although there are lots of printer or extrusion technologies, because they are independent from the prior blow molding machine, or even located in different factories, problems related to adapter control blocks between machines must be resolved. Although other processes could be completed by delivery, they are not compatible processes, and so will involve unnecessary time and costs.

The above disadvantages express the problems of a blow molding process for a plastic blow molding machine. Therefore, it is desirable to provide a machine to improve the above disadvantages. By shortening manufacturing times and production times while attaining high efficiencies, business models and enhanced competitive advantages can be obtained.

### SUMMARY OF EMBODIMENTS OF THE INVENTION

Therefore, an objective of an embodiment of the present invention is to provide a method for film laminating comprising a drying step, a heating step, an extruding step, a blow molding step, a flattening step, a first laminating step and a cutting step.

First, in a drying step, a plastic composition is dried. Then, in a heating step, the plastic composition is melted to form a gelatinized combination. In an extruding step, the gelatinized combination is extruded. In a blow molding step, air is blown into the gelatinized combination which passes through a narrow opening to form a film composition. In a flattening step, the film composition is flattened to form a uniform film, and then, in a first laminating step, a heterogeneous material is laminated onto a surface of the film using adhesive to form a composite. Finally, in a cutting step, the composite is cut into suitable lengths.

Another technique of an embodiment of the present invention is that the film printing method includes a second laminating step which is between the first laminating step and the cutting step. In the second laminating step, the heterogeneous material is laminated onto the other surface of the composite to form a single-layer-film composite double-sided with the heterogeneous material.

Another technique of an embodiment of the present invention is that the film printing method includes a repeating step and a double laminating step which are between the first laminating step and the cutting step. In the repeating step, the above steps from drying step to the first laminating step are repeated to provide another composite. In the double laminating step, the unattached sides of the two composites are laminated together to form a double layer film double-sided with the heterogeneous material.

Another technique of an embodiment of the present invention is that the film printing method includes a rolling step which occurs after the cutting step, and in the rolling step, the cut composite is rolled up to form a laminated material.

Another technique of an embodiment of the present invention is that in the drying step, the plastic composition is selected from a set consisting of polypropylene, high-density polyethylene, low-density polyethylene, and linear low-density polyethylene.

Another technique of an embodiment of the present invention is that in the first and the second laminating steps, the heterogeneous material is selected from sheet materials consisting of metal, glass, fiber, leather, plastic, and silicone.

Another objective of an embodiment of the present invention is to provide a device for film laminating, comprising a drying unit, a heating unit, an extruding unit, a blow molding unit, a flattening unit, a first laminating unit and a cutting unit.

The drying unit comprises a dryer which surrounds and defines a drying space; a feed gate is disposed on a top of the dryer, while a discharge gate is disposed at a bottom of the dryer. The plastic composition enters into the drying space through the feed gate, and after drying, is delivered from the discharge gate. The heating unit comprises a heater which surrounds and defines a mixing space; the heater includes an inlet disposed on a top of the heater, and an outlet. After heating, the plastic composition is delivered from the discharge gate to the inlet and is stirred and melted in the mixing space to form the gelatinized combination, which flows out of the heater from the outlet. The extruding unit comprises an extruder surrounding and defining an extruding space; an extruding entrance is disposed on the extruder as well as an extruding exit. The gelatinized combination delivered from the outlet enters into the extruding space through the extruding entrance and is extruded from the extruding exit.

The blow molding unit comprises a blow molding machine which surrounds and defines a blow molding space; a blow molding entrance is disposed at a bottom of the blow molding machine, while a blow molding exit is disposed on a top of the blow molding machine. The gelatinized combination delivered from the extruding exit enters into the blow molding space through the blow molding entrance. The gelatinized combination is blown by the blow molding machine and blown from the blow molding exit to form the film composition.

The flattening unit is disposed downstream from the blow molding unit and comprises two opposing flattening machines and includes two opposing rollers. The film composition blown from the blow molding exit enters into the entrance of the rollers and, after flattening, is delivered from the exit of the rollers to provide the film.

The first laminating unit disposed downstream from the flattening unit comprises a first laminating machine which includes two first feed rollers to deliver the heterogeneous material to the first laminating machine, and two first laminating rollers to laminate the film onto the heterogeneous material. The film delivered from the exit of the two rollers and the heterogeneous material enter into the entrance of two first laminating rollers together and, after pressing, are delivered from the exit of two first laminating rollers to form the composite. The cutting unit is disposed downstream from the first laminating unit and comprises a cutting machine to cut the composite into suitable lengths.

Another technique of an embodiment of the present invention is that the film laminating device comprises a second laminating unit disposed between the first laminating unit and the cutting unit. The second laminating unit includes a second laminating machine. Two second feed rollers deliver the heterogeneous material into the second laminating machine, and two laminating rollers laminate the film onto the heterogeneous material. The composite delivered from the exit of two first laminating rollers and the heterogeneous material enter into the entrance of two second laminating rollers and, after pressing, are delivered from the exit of two second laminating rollers to form the single-layer-film composite double-sided with the heterogeneous material.

Another technique of an embodiment of the present invention is that the film laminating device comprises another film laminating device, and the adjacent film laminating devices laminate two composites together through a double laminating unit. The double laminating unit is disposed between the first laminating unit and the cutting unit and comprises a double laminating machine which includes two double laminating rollers to laminate the unattached sides of the two composites together.

Another technique of an embodiment of the present invention is that the film laminating device comprises a rolling unit which includes a rolling machine to roll up the cut composite and is disposed downstream from the cutting unit.

An advantage of embodiments of the invention is in undergoing a series of process steps, from drying step, heating step, blow molding step, flattening step, the first laminating step, the second laminating step, double laminating step, cutting step, rolling step, a single or double film singly or double-sided with the heterogeneous material, which is obtained from the plastic composition. Further, delivery times and inaccuracies of the lamination can be reduced, while the film is prevented from breaking under excessive force. Therefore, various embodiments improve operational convenience and provide compatible processes to save time and costs.

### BRIEF DESCRIPTION OF THE DRAWINGS

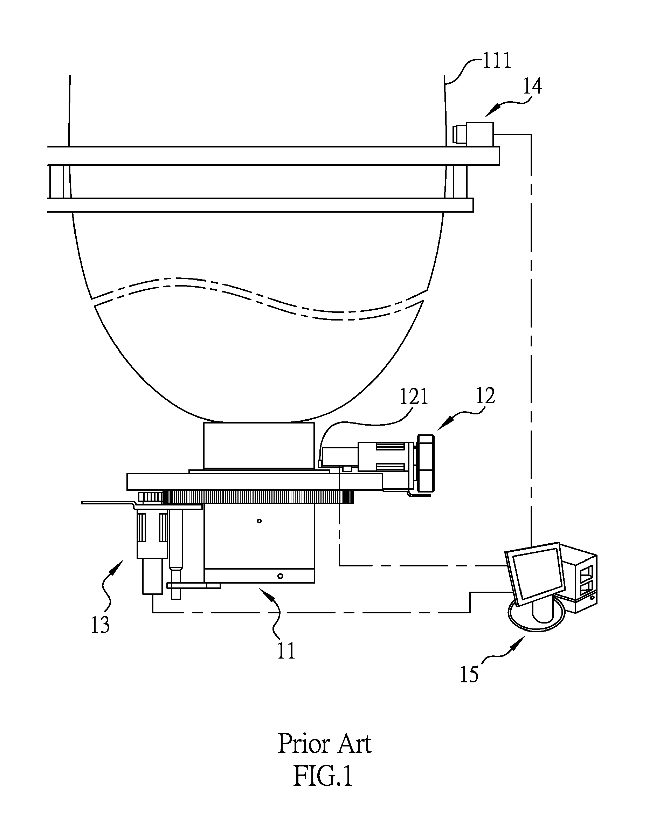

FIG. 1 is a side view of a prior art device disclosed in Taiwan Utility Patent No. M388411, showing a blow molding mechanism of a plastic blow molding machine;
FIG. 2 is a flow chart depicting a first embodiment method according to the present invention;
FIG. 3 is a schematic drawing depicting components of a first embodiment device;
FIG. 4 is a cross-sectional view depicting a surface of a film in the first embodiment that is laminated on a heterogeneous material using an adhesive to form a composite;
FIG. 5 is a cross-sectional view depicting two surfaces of a film in the first embodiment that are respectively laminated onto the heterogeneous materials using adhesives to form a single-layer-film composite double-sided with the heterogeneous materials;
FIG. 6 is a flow chart depicting a second embodiment method according to the present invention;
FIG. 7 is a schematic drawing illustrating a portion of a embodiment device; and
FIG. 8 is a cross-sectional diagram illustrating unattached surfaces of the two composites of the second embodiment that are laminated together to form a double layer film double-sided with the heterogeneous materials.

### DETAILED DESCRIPTION OF THE PREFERRED EMBODIMENTS

Specific structural and functional details disclosed herein will become apparent from the following description of the preferred embodiments of the present invention taken in conjunction with the accompanying drawings.

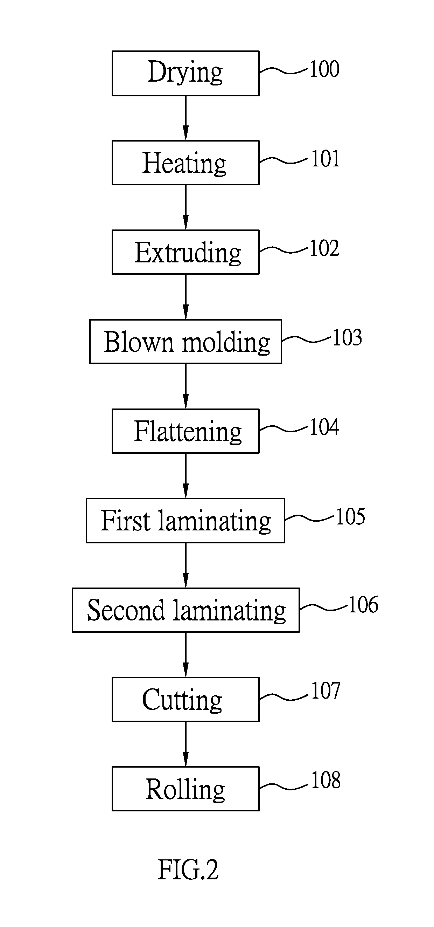

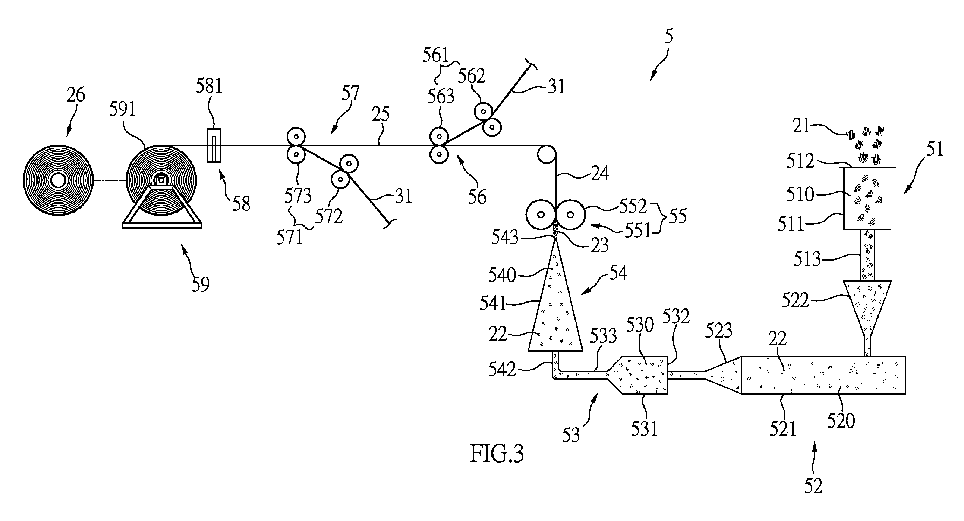

With reference to FIGs. 2 and 3, a first embodiment method and device according to the present invention are depicted and the method comprises a drying step 100, a heating step 101, an extruding step 102, a blow molding step 103, a flattening step 104, a first laminating step 105, a second laminating step 106, a cutting step 107 and a rolling step 108.

First, in the drying step 100, a plastic composition 2 is dried. The plastic composition 21 is selected a set consisting of polypropylene, high-density polyethylene, low-density polyethylene, and linear low-density polyethylene. However, for other embodiments, based upon different demands, the plastic composition 21 can be selected from different polyolefins, optionally including additives, and are not necessarily limited by the above materials.

In the heating step 101, the plastic composition 21 is melted to form a gelatinized combination 22. In the extruding step 102, the gelatinized combination 22 is extruded.

In the blow molding step 103, air is blown into the gelatinized combination 22, which passes through a narrow opening to form a film composition 23.

Then, in a flattening step 104, the film composition 23 is flattened to form a uniform film 24.

In certain embodiments, a stretching step (not depicted in the figures) can be added downstream from the flattening step 104. In the stretching step, the film 24 is stretched based upon different demands.

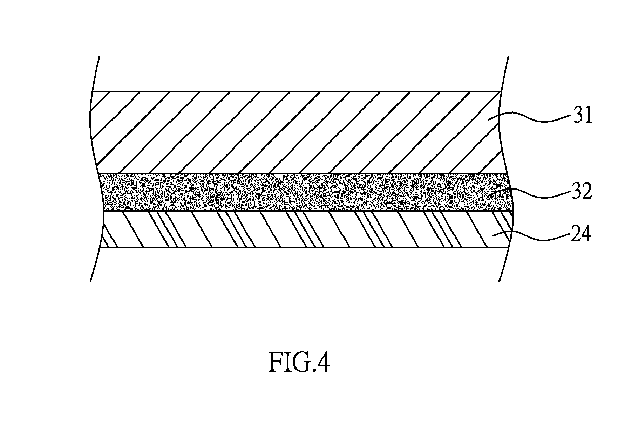

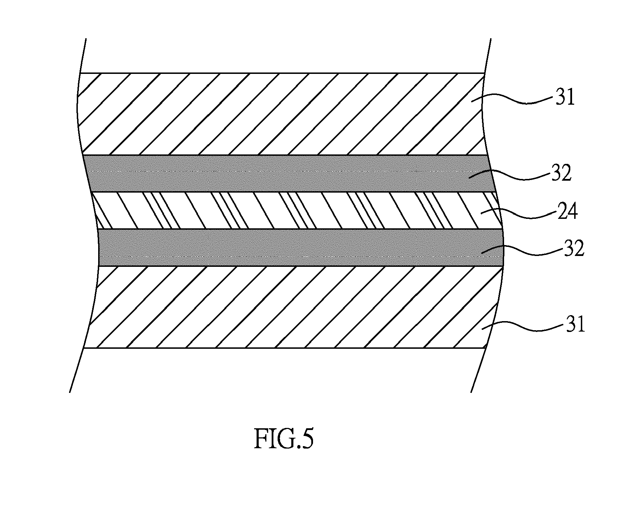

With reference to FIGs. 4 and 5, in the first laminating step 105, the heterogeneous material 31 is laminated onto a surface of the film 24 using adhesive 32 to form a composite 25. In the first embodiment, the adhesive 32 is water soluble gum.

In the second laminating step 106, the heterogeneous material 31 is laminated onto the other surface of the composite 25 to form a single-layer-film composite 25 double-sided with the heterogeneous material.

In the first and second laminating steps 105 and 106, the heterogeneous material 31 is selected from sheet materials consisting of metal, glass, fiber, leather, plastic, and silicone. However, in other embodiments, different heterogeneous materials 31 can be selected based upon different demands.

Additionally, when the user laminates a surface of the film 24, the second laminating step 106 can be skipped based upon the user's requirement.

Subsequently, in the cutting step 107, the composite 25 is cut into suitable lengths.

Finally, in the rolling step 108, the composite 25 is rolled up to provide the final laminated product 26. However, when the composite 25 is attached with a heterogeneous material 31 that is relatively thick, or based upon the customer's cutting requirements for the composite 25, the rolling step 108 can be skipped.

With reference to FIG. 3, a film laminating device 5 in accordance with the above methods comprises a drying unit 51, a heating unit 52, an extruding unit 53, a blow molding unit 54, a flattening unit 55, a first laminating unit 56, a second laminating unit 57, a cutting unit 58 and a rolling unit 59.

The drying unit 51 comprises a dryer 511 which surrounds and defines a drying space 510; a feed gate 512 is disposed on a top of the dryer 511, and a discharge gate 513 is disposed at a bottom of the dryer 511. The plastic composition 21 enters into the drying space 510 through the feed gate 512, and after drying, is delivered from the discharge gate 513.

The dryer 511 can dry the plastic composition 21 in advance to vaporize extra moisture and to prevent the plastic composition 21 from being impacted by surface bubbles, so that the defect rate is reduced.

The heating unit 52 comprises a heater 521 which surrounds and defines a mixing space 520; the heater 521 includes an inlet 522 disposed on the top of the heater 521, and an outlet 523. After heating, the plastic composition 21 is delivered from the discharge gate 513 to the inlet 522 and enters into the mixing space 520. The heater 521 mixes the plastic composition 21 at high speeds and stirs it, so that the plastic composition 21 is melted to form the gelatinized combination 22 which flows out of the heater 521 from the outlet 523.

In the first embodiment, while the heater 521 heats up the plastic composition 21, the temperature is set between 150 °C to 300 °C, and the pressure is set between 500 to 3000 psi, with a heating time between 3 and 30 minutes. The above factors disclosed are merely exemplary and may be adjusted in accordance with the material requirements.

The extruding unit 53 comprises an extruder 531 which surrounds and defines an extruding space 530; the extruder 531 includes an extruding entrance 532 and an extruding exit 533. The gelatinized combination 22 delivered from the outlet 523 enters into the extruding space 530 through the extruding entrance 532 and is extruded from the extruding exit 533.

A filter can be disposed over the extruding exit 533 to filter the gelatinized combination 22 extruded from the extruding exit 533, so that the quality of the gelatinized combination 22 is improved.

The blow molding unit 54 comprises a blow molding machine 541 which surrounds and defines a blow molding space 540; a blow molding entrance 542 is disposed at a bottom of the blow molding machine 541, while a blow molding exit 543 is disposed on a top of the blow molding machine 541. The gelatinized combination 22 delivered from the extruding exit 533 enters into the blow molding space 540 through the blow molding entrance 542, and the gelatinized combination 22 is blown by the blow molding machine 541, and blown from the blow molding exit 543 as a film composition 23.

In the first embodiment, the width of the blow molding exit 543 is around 0.01 mm to 1 mm, and can be adjusted to change the thickness of the film composition 23 in accordance with the user's requirements.

The flattening unit 55 is disposed downstream from the blow molding unit 54 and comprises two flattening machines 551 on opposing sides which include two rollers 552 on the opposing sides. The film composition 23 blown from the blow molding exit 543 enters into the entrance of the rollers 552, and after flattening, is delivered from the exit of the rollers 552 to provide the film 24.

By flattening the film composition 23 which is blown from the blow molding exit 543 the problem of unequal thickness of the film 24 can be reduced.

In other embodiments, based upon the user's requirements, an extending unit (not depicted in the figures) can be added downstream from the flattening unit 55, comprising a roller group set at intervals. The film 24 delivered from the exit of two rollers 552 enters into the entrance of the roller group to be extended, and is delivered from the exit of the roller group to the first laminating unit 56 to control the thickness of the film 24.

The first laminating unit 56 disposed downstream from the flattening unit 55 and comprises a first laminating machine 561 which includes two first feed rollers 562 to deliver the heterogeneous material 31 to the first laminating machine 561, and two first laminating rollers 563 to laminate the film 24 onto the heterogeneous material 31.

The film 24 delivered from the exit of the two rollers 552, and the heterogeneous material 31, enter into the entrance of two first laminating rollers 563 together, and after being pressed together, they are delivered from the exit of two first laminating rollers 563 to provide the composite 25 which is a laminate of the film 24 and the heterogeneous material 31.

The second laminating unit 57 is disposed downstream from the first laminating unit and includes a second laminating machine 571, two second feed rollers 572 to deliver the heterogeneous material 31 into the second laminating machine 571, and two laminating rollers 573 to laminate the film 24 onto the heterogeneous material 31.

The composite 25 delivered from the exit of two first laminating rollers 563, and the heterogeneous material 31, enter into the entrance of two second laminating rollers 573, and after being pressed together, they are delivered from the exit of the two second laminating rollers 573 to provide the single-layer-film composite 25 double-sided with the heterogeneous material 31.

Particularly, as long as the user laminates a surface of the film 24, the second laminating step 107 can be skipped based upon the user's requirement.

The cutting unit 58 is disposed downstream from the second laminating unit 57 and comprises a cutting machine 581 to cut the composite 25 into suitable lengths. The rolling unit 59 is disposed downstream from the cutting unit 58 and includes a rolling machine 591 to roll up the composite 25 to provide the final laminated material 26.

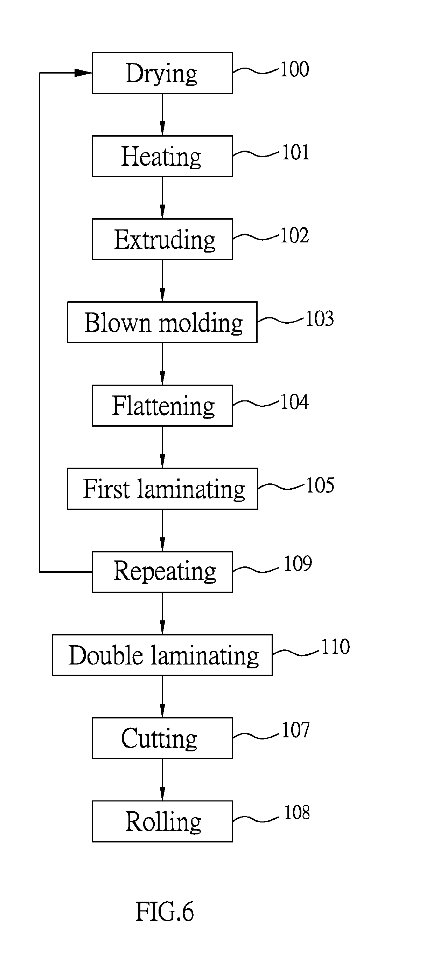

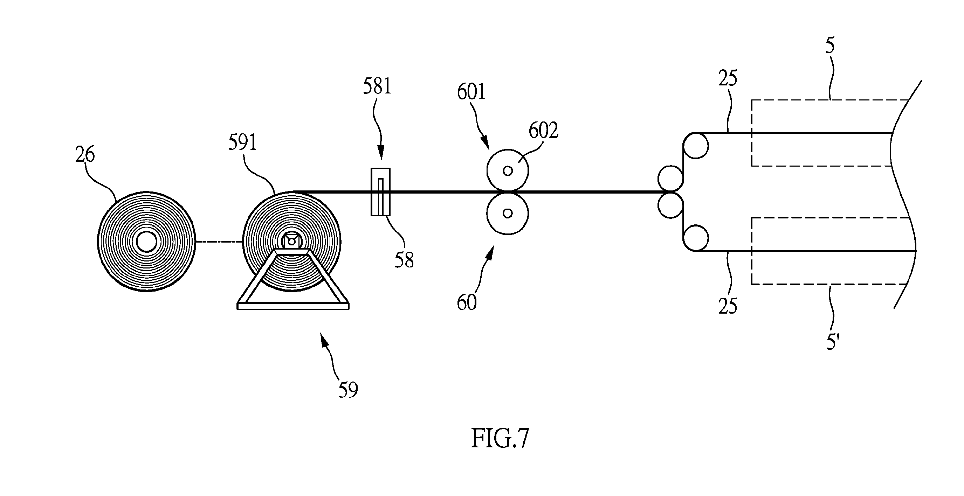

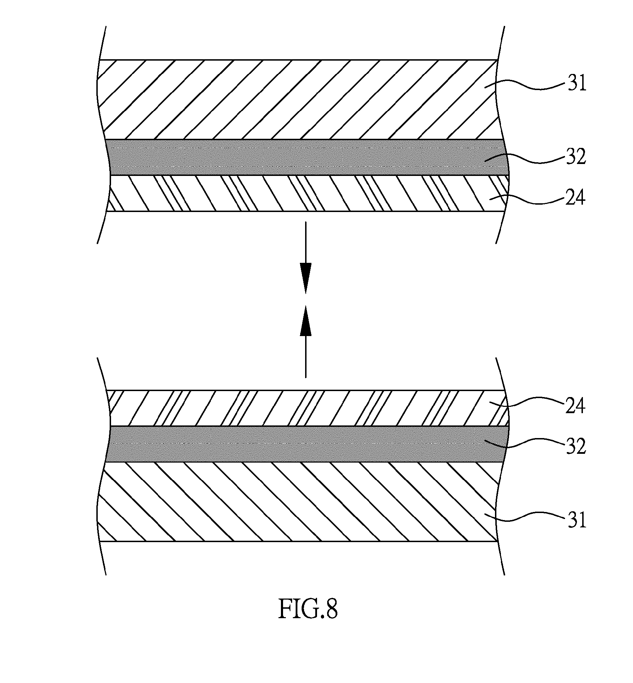

With reference to FIGs. 6, 7 and 8, a second embodiment according to the present invention is depicted. The second embodiment is similar to the first one, and so common features are not described again. Regarding the differences, they include a repeating step 109 and a double laminating step 110, which are between the first laminating step 105 and the cutting step 107, not including the second laminating step 106.

In the repeating step 109, the above steps from drying step 100 to the first laminating step 105 are repeated to form another composite 25, and in the double laminating step 110, the unattached sides of the two composites 25 are laminated together to form a double layer film double-sided with the heterogeneous material 31.

The film laminating device comprises another film laminating device 5', and it forgoes the second laminating unit 57. The adjacent film laminating devices 5 and 5' laminate two composites 25 together through a double laminating unit 60.

The double laminating unit 60 is disposed between the first laminating unit 56 and the cutting unit 58 and comprises a double laminating machine 601 which includes two double laminating rollers 602 to laminate the unattached sides of the two composites 25 together.

In the second embodiment, the unattached sides of the two composites 25 are laminated together. Because the two surfaces are the same material, in comparison with different materials, it is easier and more stable for lamination purposes. Moreover, when the heterogeneous material 31 is thicker, the thickness of the film 24 can be increased for stabilization purposes.

Since two composites 25 pass through the first laminating unit 56 respectively, different heterogeneous materials 31 can be laminated onto the surface of the film 24, or the heterogeneous material 31 can be crisscross laminated onto the surface of the film 24 to increase the diversity of the laminated material 26.

With the above-mentioned descriptions, the following benefits can be obtained:

### 1. High efficiency

After the flattening step 104, the film 24 undergoes the first laminating step 105 and the second laminating step 106, which reduces the time otherwise required for rolling up the film 24 and delivering it to the factory for laminating onto the heterogeneous material 31. Therefore, efficiency of manufacturing processes is improved.

### 2. Convenience of operation

Because the first feed rollers 562 deliver the heterogeneous material 31 into the first laminating machine 561 and two first laminating rollers 563 laminate the film 24 onto the heterogeneous material 31, the operation is convenient for laminating the film 24 onto the heterogeneous material 31 and for subsequent processes.

### 3. Compatible processes

By undergoing a series of processing steps, including drying, heating step, blow molding step, flattening step, the first laminating step, the second laminating step, double laminating step, cutting step, and rolling step, the laminated material 26 is obtained from the plastic composition 21. During the processing, delivery times and lamination inaccuracies are reduced, and the film is prevented from breaking under excessive force. Therefore, the operational convenience and compatible processes save time and costs.

Consequently, the present invention through the drying unit 51, the heating unit 52, the extruding unit 53, the blow molding unit 54, the flattening unit 55, the first laminating unit 56, the second laminating unit 57, the cutting unit 58, and the rolling unit 59, causes the plastic composition 21 to undergo the steps of drying, heating, blow molding, flattening, first laminating, second laminating, double laminating, cutting, and rolling, so that the laminated material 26, which can be a single or double film, singly or double-sided with the heterogeneous material 31, is obtained. Various embodiments eliminate the time needed to roll up the film 24 for delivery to another factory for laminating with the heterogeneous material 31, and improve the efficiency of the manufacturing processes and operational convenience, thereby enhancing competitive advantages.

The foregoing detailed description is merely in relation to two preferred embodiments and shall not be construed as limiting the invention. It is to be understood that many other possible modifications and variations can be made without departing from the spirit and scope of the invention as hereinafter claimed.

## Claims

1. A method of film laminating comprising:
a drying step, for drying a plastic composition;
a heating step, for melting the plastic composition to form a gelatinized combination;
an extruding step, for extruding the gelatinized combination;
a blow molding step, wherein air is blown into the gelatinized combination to form a film composition;
a flattening step, for flattening the film composition to form a uniform film;
a first laminating step, wherein a first heterogeneous material is laminated onto a surface of the film using an adhesive to form a composite; and
a cutting step, in which the composite is cut into predetermined lengths.

2. The method of claim 1, further comprising a second laminating step between the first laminating step and the cutting step, wherein in the second laminating step, a second heterogeneous material is laminated onto another surface of the composite to form a single-layer-film composite double-sided with the first and second heterogeneous materials.

3. The method of claim 1, further comprising a repeating step and a double laminating step which are between the first laminating step and the cutting step, wherein in the repeating step, the steps from drying step to the first laminating step are repeated to form another composite, and in the double laminating step, unattached sides of the two composites are laminated together to form a double layer film double-sided with the heterogeneous material.

4. The method of claim 2, further comprising a rolling step set after the cutting step, and in the rolling step, the cut composite is rolled up to provide a final laminated material.

5. The method of claim 4, wherein in the drying step, the plastic composition is selected from a set consisting of polypropylene, high-density polyethylene, low-density polyethylene, and linear low-density polyethylene.

6. The method of claim 5, wherein the heterogeneous material is selected from sheet materials consisting of metal, glass, fiber, leather, plastic, and silicone.

7. A film laminating device comprising:
a drying unit, comprising a dryer which surrounds and defines a drying space, a feed gate disposed on a top of the dryer, and a discharge gate at a bottom of the dryer, wherein a plastic composition enters into the drying space through the feed gate, and after drying, is delivered from the discharge gate;
a heating unit, comprising a heater which surrounds and defines a mixing space, the heater comprising an inlet on a top of the heater and an outlet, wherein after heating, the plastic composition is delivered from the discharge gate to the inlet and is stirred and melted in the mixing space to form a gelatinized combination which flows out of the heater from the outlet;
an extruding unit, comprising an extruder which surrounds and defines an extruding space, an extruding entrance on the extruder and an extruding exit on the extruder, wherein the gelatinized combination delivered from the outlet enters into the extruding space through the extruding entrance and is extruded from the extruding exit;
a blow molding unit, comprising a blow molding machine which surrounds and defines a blow molding space, a blow molding entrance at a bottom of the blow molding machine, a blow molding exit on a top of the blow molding machine, wherein the gelatinized combination delivered from the extruding exit enters into the blow molding space through the blow molding entrance, the gelatinized combination blown by the blow molding machine, and blown from the blow molding exit to provide a film composition;
a flattening unit, disposed downstream from the blow molding unit and comprising at least two opposing flattening machines which include two opposing rollers, wherein the film composition blown from the blow molding exit enters into the entrance of the roller, and after flattening, is delivered from an exit of the roller to provide a film;
a first laminating unit, being disposed downstream from the flattening unit and comprising a first laminating machine which includes at least two first feed rollers to deliver a first heterogeneous material to the first laminating machine, and at least two first laminating rollers to laminate the film onto the first heterogeneous material, wherein the film delivered from the exit of two rollers, and the first heterogeneous material, enter together into an entrance of the two first laminating rollers, and after pressing, are delivered from an exit of two first laminating rollers to provide a composite; and
a cutting unit, disposed downstream from the first laminating unit and comprising a cutting machine to cut the composite into predetermined lengths.

8. The film laminating device as claimed in claim 7, further comprising a second laminating unit disposed between the first laminating unit and the cutting unit which includes a second laminating machine, at least two second feed rollers to deliver a second heterogeneous material into the second laminating machine, and two laminating rollers to laminate the composite onto the second heterogeneous material, wherein the composite delivered from the exit of the two first laminating rollers and the second heterogeneous material enter into the entrance of two second laminating rollers, and after pressing, they are delivered from the exit of two second laminating rollers to provide a single-layer-film composite double-sided with the first and second heterogeneous materials.

9. The film laminating device as claimed in claim 7, further comprising another film laminating device, and the film laminating devices laminate two composites together through a double laminating unit, the double laminating unit disposed between the first laminating unit and the cutting unit and comprising a double laminating machine which includes two double laminating rollers to laminate unattached sides of the two composites together.

10. The film laminating device as claimed in claim 8, further comprising a rolling unit disposed downstream from the cutting unit which includes a rolling machine to roll up the cut composite.
